Europäisches Patentamt

European Patent Office

Office européen des brevets

(11) Publication number: **0 497 423 A1**

# EUROPEAN PATENT APPLICATION

(21) Application number: **92200235.7**

(22) Date of filing: **29.01.92**

(51) Int. Cl.5: **A01J 25/13**

(30) Priority: **31.01.91 NL 9100165**

(43) Date of publication of application:
**05.08.92 Bulletin 92/32**

(84) Designated Contracting States:
**AT BE CH DE DK ES FR GB GR IT LI NL PT SE**

(71) Applicant: **AREND B.V.**
**Heembadweg 3**
**NL-9561 CZ Ter Apel(NL)**

(72) Inventor: **Hoitzing, Hendrik Harm**
**De Veenbes 63**
**NL-9561 DH Ter Apel(NL)**

(74) Representative: **de Wit, Gerard Frederik, Ir. et al**
**Octrooi- en Merkenbureau De Wit B.V.**
**Breitnerlaan 146**
**NL-2596 HG Den Haag(NL)**

(54) **Method, device, mould, cover, plate and case for manufacturing self-pressing cheese.**

(57) Method, device, mould (17,17'), cover (5,5') and case for manufacturing soft cheese, which may be turn-over cheese, in which the moulds (17,17') have a whey permeable bottom (19) with a whey impermeable plate (11) below the moulds and/or vertical play of the moulds in a case, moulds (17,17') and covers (5,5') if any being attached to plates (1,2,11) to form a case.

FIG.1

The invention relates to a method, device, mould, cover, plate and case for manufacturing-self-pressing cheese.

When manufacturing self-pressing cheese a mixture of curd and whey is put in a mould with perforated side walls, so that dewheying occurs via these walls. Mostly the bottom has grooves, for instance with a cross-section of 2 x 1 mm. With this traditional manufacturing of soft cheese a number of disadvantages occur. These are, among others, that the rind forming is not ideal. Further the consistency of the cheese is not completely uniform, because, also due to the closed bottom, the dewheying is not always homogeneous.

German Offenlegungsschrift DE-A-2 449 916 states that it was not allowed to make use of a stack of moulds with a perforated bottom, because than the danger exists, that whey from a higher positioned mould will reach a lower positioned mould.

The solution of this problem mentioned in this Offenlegungsschrift is to provide a non pervious mould bottom with grooves to abduct the whey towards the circumference of the mould. The same solution for the indicated problem is depicted in EP-B-0.244.330.

This solution leaves at least two difficulties, which the invention aims to eliminate, preferably both of them but in some instances elimination of only one of them is already an important advantage.

The first difficulty is the quality of the rind forming and regularity of dewheying.

The second difficulty only occurs with soft cheese making in which the moulds are reversed several times. Such cheese in this specification is indicated as "turn-over cheese". Examples are Brie and Danish Blue, but many other kinds exist.

The said second difficulty is the phenomenon which may occur with several kinds of cheese, that when reversing the mould the curd sometimes sticks to the side-walls and bottom, which may lead to unsatisfactory rind and cheese forming.

The invention relates to soft cheese making without reversal of the mould as well as to manufacturing so-called turn-over cheese.

Accordingly a first feature of the invention provides in a method for manufacturing self-pressing cheese, wherewith curd under influence of only its weight is dewheyed in a mould having whey permeable side-walls and bottom via which dewheying occurs, that a plurality of moulds are stacked on each other and in that liquid tight plates are located between moulds stacked on each other.

In case of manufacturing turn-over cheese the invention provides the feature that the moulds each are provided with a whey permeable cover and in that the stacked moulds are repeatedly reversed between two positions differing 180° from each other.

In the case that the stacked moulds are in the position in which the cover is down dewheying occurs through the cover.

A mould for applying the inventive method has, apart from perforated side walls, a perforated bottom and if it has a cover a perforated cover.

In order to simplify to a considerable extend handling of the cheese moulds with the manufacturing of soft cheese, according to a further elaboration of the invention it can be
plate with whey discharge space between the plate and the moulds and that covers belonging to the mould are attached to a second plate.

As already indicated with manufacturing turn-over cheese it is important, that the cheese does not stick, that is to say remains in its former place. This namely induces undesired disturbances in the shape and the equal consistence of the cheese. For this reason it forms an important improvement of the invention, that the moulds are attached to the first plate with vertical play. This means, that with turning-over they always fall over a little distance and experience has shown, that even a fall of 1 to 2 mm suffices to obtain a high guarantee, that the cheese looses indeed and falls down.

In this respect it is pointed to GB-A-2 038 161 in which a row of moulds for manufacturing soft cheese has been shown. The row of moulds forms a unit and rests on a grooved table with some vertical play for enhancing cleaning. With actual cheese manufacturing no reversal of the moulds is carried out and no sticking problem occurs.

To easy handle simultaneously a plurality of cheese moulds according to the invention a case is provided as defined in claim 6.

In case of the last mentioned embodiment of the invention the moulds as well as the covers may be attached somewhat movable, but not necessarily removable. Extensive experiments have shown, that nevertheless a sufficiently hygienic cleaning of moulds and covers can be obtained by application of normal rinsing liquids. It has appeared, that therewith it is important, that recesses and corners are avoided and that the moulds and the covers are retained with slight play, so that the cleansing liquid can penetrate everywhere.

The invention encompasses also a plate to be used with the case as described above. Especially therewith in an advantageous way use can be made of undercut grooves, which at the one hand give the possibility, that members of the moulds or the covers are movable in the grooves, which enhances cleaning and wherewith at the other hand the height of the undercut may be greater than that of the member protruding into it, which procures a small falling height as well as play for cleaning.

With use of a plurality of cases on top of each other the problem occurs, that the temperature in the interior of a whole with a large number of moulds must be controllable. Namely for an accurate reproducibility of the quality and the taste this is of great importance. With application of cases according to the invention therefore preferably holes are made in the plates to let pass conditioning air.

It may happen that at the one hand the quality of rind forming and the homogenity of the cheese are satisfactory without whey-pervious bottom, but that the difficulty of cheese sticking in the mould when the latter is reversed still is serious. For this reason the invention encompasses also the case indicated in claim 14.

In the following the invention is further elucidated on hand of the drawing, in which:

fig. 1 shows a partial cross-section through cases stacked on each other;

fig. 2 shows a view of a case stack, as it has been tried in practice and has appeared satisfactory;

fig. 3 is a plan view of a case;

fig. 4 is a side view thereof; and

fig. 5 is a cross-section through a filling plate for the moulds in a case.

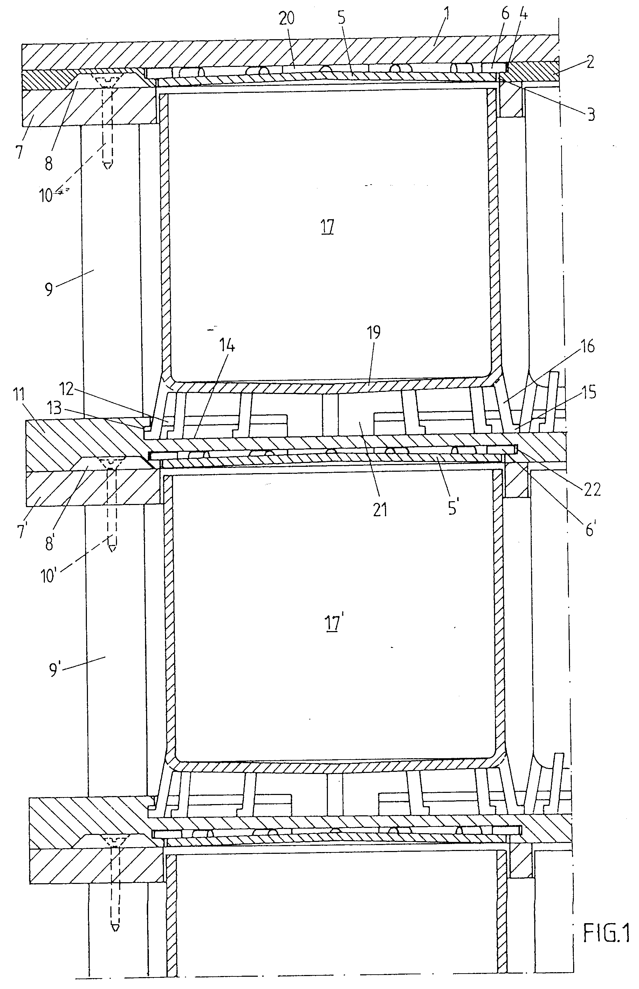

In fig. 1 reference 1 indicates a top plate, which is only present at the upper side of a stack of cases. Below this plate there is a plate 2 with an opening 3, which at its upper side has an enlargement which together with the top plate 1 forms an undercut groove. In the opening 3 lies a cover 5, which is somewhat convex and at its edge is provided with supporting members 6. The cover is of perforated material, preferably a material which is provided with thin grooves with bores in the bottom of the grooves. In the shown position these bores have no function, but after turning 180° the cover is at the lower side. Then dewheying may happen through these bores.

Plates 1 and 2 rest on a plate 7, which at its upper side is provided with a truncated cone shaped finding member 8, which cooperates with a correspondingly shaped recess in the plate 2.

The plate 7 is supported by a distance member 9, which permanently is connected to this plate, for instance by means of a screw 10, indicated with interrupted lines. This column 9 is at its lower side fixedly connected to a plate 11 by not shown means. In this plate a recess or closed hole 12 is present with a broadening, which together with the bottom 14 of the closed hole 12 form an undercut groove 13. Into this groove protrude the feet 15 of the legs 16 of a mould 17 with perforated side walls 18 and a perforated bottom 19, which is somewhat bent downwardly. The wall 18 and the bottom 19 are again preferably executed with fine grooves with bores in the bottom of the grooves. The undercut grooves between the plates 1 and 2 as well as in the plate 11 have an interruption 20 respectively 21, which extends as a shallow channel over the whole length or width of the related plate, by reason of which the cover 5 and the mould 17 can be mounted or removed, without the necessity to loose plates 1 and 2 from each other. Whey removal occurs via the shallow channels 20 and 21. Of course constructions may be used, with which for instance the legs 16 are elastical. For cleaning of the moulds or the case, removal of the moulds or the covers is not necessary.

The lower side of plate 11 corresponds in shape completely with the plate 2 and has an undercut groove 22 for receiving the support members 6' of a cover 5' for a further mould 17'. By means of finding members 8 the plate 11 is kept on its place on plate 7', which completely corresponds to the plate 7 and cooperates in the same way with a distance member 9', finding member 8' and screw 10'.

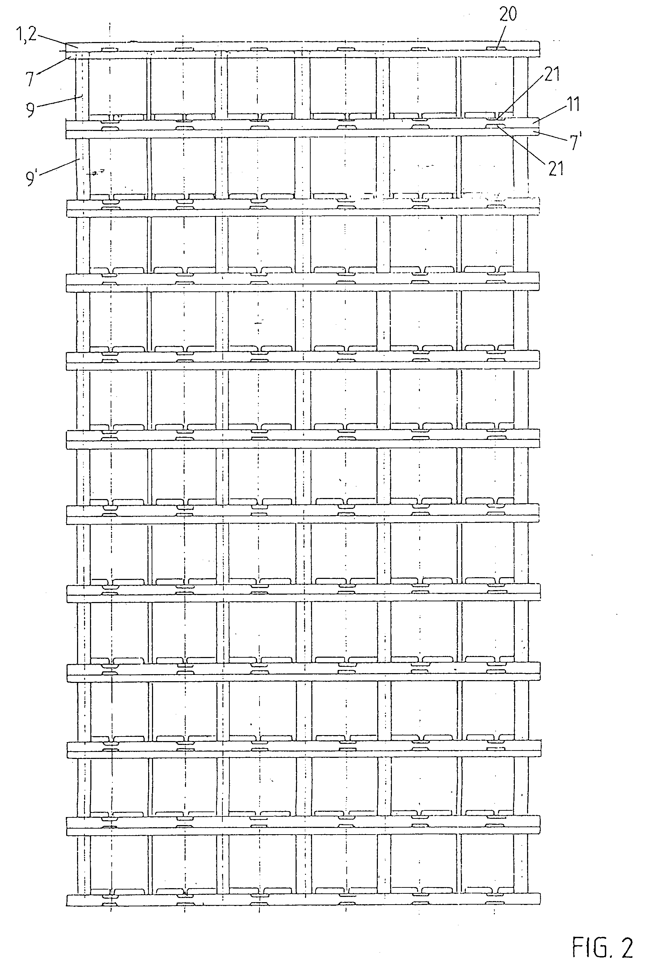

An equal construction is then completely repeated and this for a complete stack of cases, which according to fig. 2 may contain eleven cases.

The feet 13 of the moulds 17 have a smaller height than the undercut groove between plates 11 and 14, so that after reversing of the whole the mould falls down in the undercut groove and therewith begins to rest on the cover.

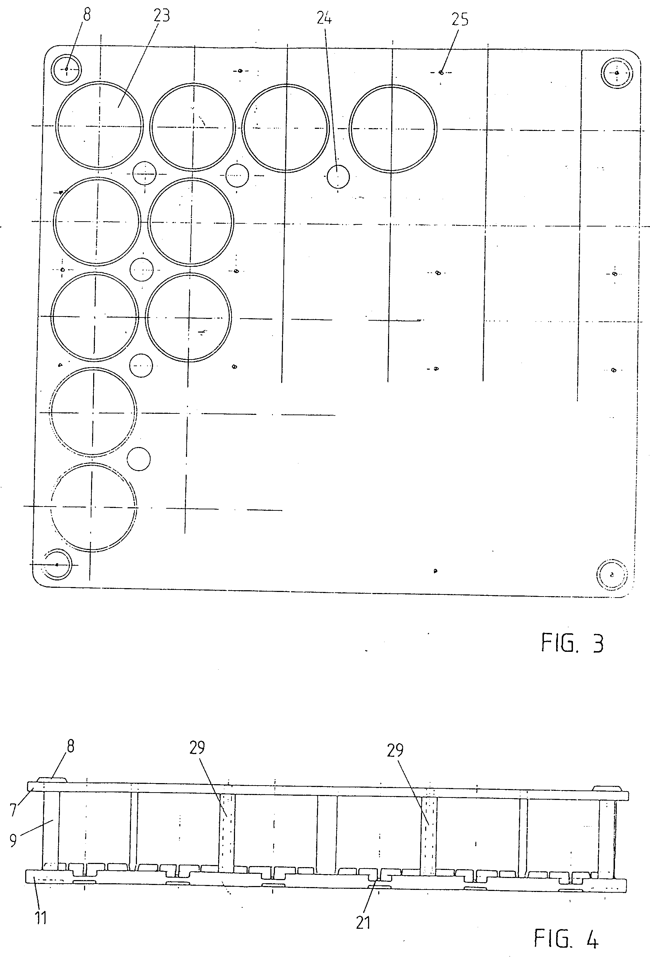

As more especially appears from fig. 3 a case has for instance five rows which each six cheese moulds. At the corners one has finding members 8 and there below the columns 9, whereas apart from the closed holes for receiving cheese moulds or covers, in fig. 3 indicated with 23, through going holes 24 are present for letting pass conditioning air. For a stabile quality of the cheese an accurate temperature control is necessary, but if according to the invention many cheese moulds are used relatively near to each other and if they give off some heat, for instance by a fermentation process or such-like, heat removal is necessary. This may happen via the holes 24.

The connection between the plates, such as 1 and 2 may be done with screws, which in fig. 3 schematically are indicated at 25 and which protrude into distance members 29.

In fig. 4 a side view of a single case has been shown, wherewith the same references are used as earlier.

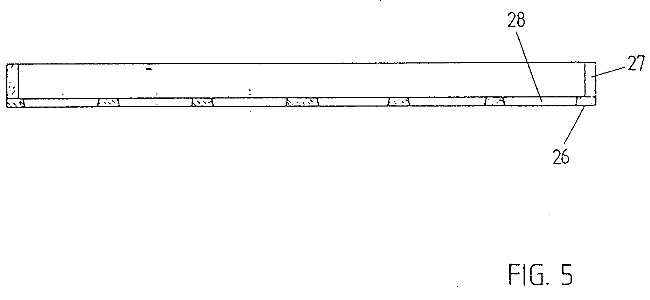

Finally in fig. 5 a filling plate has been indicated, wherewith moulds of a case can be filled. The filling plate 26 with upright edge 27 has openings 28, which after mounting of the filling plate on a case serve to bring into the filling plate formed by 26 and 27 a whey containing curd which then reaches the cheese mould.

The shown embodiment of the invention gives the possibility to fill rapidly with curd a plurality of moulds of a case, to stack the cases on each other to form an unit, which with not shown means can be reversed, wherewith the removal of the cheese from the moulds is immediately possible after taking the cases from each other. The cleaning can reliably be carried out with simple means, because it is possible to avoid recesses and corners. The quality of the obtained cheese forms, especially with respect to the rind and the homogeneity of the cheese, an improvement with respect to traditional technics.

Of course only one possible embodiment has been shown, in which variations may be applied. So it is for instance possible to leave out the feet 15 and the related undercut groove and to let the moulds 14 in their reversed position rest on the cover 5 or on an edge of the plate 7 or 7' protruding somewhat inwardly.

**Claims**

1. Method for manufacturing self-pressing cheese, wherewith curd under influence of only its weight is dewheyed in a mould having whey permeable side-walls and bottom via which dewheying occurs, **characterized** in that a plurality of moulds (17,17') are stacked on each other and in that liquid tight plates are (11,14) are located between moulds (17,17') stacked on each other.

2. Method according to claim 1, **characterized** in that the moulds each are provided with a whey permeable cover and in that the stacked moulds are repeatedly reversed between two positions differing 180° from each other.

3. Device for applying the method according to claim 1 or 2, having a plurality of moulds (17,17') with whey permeable bottoms, which moulds are attached to the upper side of plates (11), which together with the moulds are stacked on each other, **characterized** in that whey removal spaces (21) are present between the bottoms (19) of the moulds (17,17') and the plates (11) and in that the plates at the location of the moulds are impervious to whey.

4. Device according to claim 3, in which the moulds are provided with whey permeable covers, **characterized** in that the covers are attached to the lower side of said plates (11).

5. Device according to claim 4, **characterized** in that the moulds are attached to the plate (11) with vertical play.

6. Case of devices according to claims 3-5, **characterized** by a plurality of plates (11), each having at its upper side one or more attachment means (13) for a mould (17,17') and at its lower side one or more attachment means (22) for a mould cover.

7. Case according to claim 6, **characterized** in that the attachment means (13,22) consist in undercut grooves.

8. Case according to claim 6 or 7, **characterized** by auxiliary plates (7) provided with openings encompassing the upper side of a cheese mould and located below the plates (11).

9. Case according to claim 6, 7 or 8, **characterized** by distance members (9,9') attached to said plates (11) and provided with finding means (8) cooperating with the plate (11) next higher up.

10. Plate (11) to be used in a device according to claims 3-5 or in a case according to claim 6 or 7, **characterized** in that it is provided at one side with one or more recesses having an undercut groove (13), the plate (11) being impervious to whey at the location of the recesses.

11. Plate according to claim 10, **characterized** in that at its other side it is also provided with one or more recesses having an undercut groove (22), the plate (11) being impervious to whey at the location of the recesses.

12. Cheese mould with whey permeable side-walls and bottom (19), **characterized** by downwardly directed protrusions (16) to create a whey removal space (21) below the bottom (19).

13. Whey permeable cover or cheese mould, **characterized** by outwardly protruding attachment members (6,6').

14. Case having at least one plate (11) provided with attachment means (13) for a plurality of cheese moulds having whey permeable side-walls and a whey permeable bottom, at least one other plate (1,11) having attachment means (22) for a plurality of mould covers and means (9,9') for fixedly connecting the plates (11,1) to each other, **characterized** in that the attachment means (13) for the cheese moulds have vertical play.

FIG.1

FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 491 291 (H. BENTELE ET AL.)<br><br>* page 1, line 1 - line 13 *<br>* page 4, line 8 - line 24; figures 2,6 * | 1-4,6, 12,13 | A01J25/13 |
| Y | | 7,9-11 | |
| A | | 14 | |
| | --- | | |
| Y | FR-A-2 594 633 (CHALON-MEGARD)<br>* page 4, line 25 - line 33; figure 2 * | 7,10,11 | |
| | --- | | |
| Y | FR-A-1 595 911 (SOCIETE POUR LA TRANSFORMATION DES MATIERES PLASTIQUES-STAMP)<br>* page 1, line 22 - line 25; figure 5 * | 9 | |
| | --- | | |
| A | EP-A-0 126 861 (ROYAL-KÄSEFORMEN UND -PRESSEN AG) | | |
| | --- | | |
| A,D | DE-A-2 449 916 (ALPMA ALPENLAND-MASCHINENBAU HAIN & CO KG) | | |
| | --- | | |
| A,D | EP-B-0 244 330 (A. MINO-GAILLARD S.A.)<br>--- | | TECHNICAL FIELDS SEARCHED (Int. Cl.5) |
| A,D | GB-A-2 038 161 (ALFA-LAVAL S.A.) | | A01J |
| | ----- | | |

The present search report has been drawn up for all claims

| Place of search | Date of completion of the search | Examiner |
|---|---|---|
| THE HAGUE | 08 MAY 1992 | MARANGONI G. |

EPO FORM 1503 03.82 (P0401)